# EUROPEAN PATENT APPLICATION

(11) **EP 0 817 442 A2**
(43) Date of publication of application: **07.01.1998**
(21) Application number: 97304713.7
(22) Date of filing: 30.06.1997
(51) Int. Cl.: H04L 27/227

(54) **Carrier recovery in quadrature receivers**

(30) Priority: 02.07.1996 GB 9613812
(71) Applicant: PLESSEY SEMICONDUCTORS LIMITED, Swindon, Wiltshire SN2 2QW (GB)
(72) Inventor: Cowley, Nicholas Paul, Wroughton, Wiltshire SN4 9HZ (GB)
(74) Representative: Hoste, Colin Francis

(57) **Abstract**

A quadrature phase shift keying (QPSK) transmission system amplifies a 480MHz intermediate frequency (IF) signal in an IF amplifier 1 and subsequently mixes it in two paths with quadrature 480 MHz signals from a local oscillator 4 using mixers 2, 3, by way of a phase splitter 5. Base-band signals in an in-phase (I) path and a quadrature-phase (Q) path from the outputs of the respective mixers 2 and 3 are applied to a dual analogue-to-digital convertor arrangement 8 by way of respective amplifiers 6 and 7. From here, a processor 9 demodulates and error checks received data and generates a reference signal of a frequency controlled by a digitally implemented Costas loop 10 in dependence upon the digitised I and Q signals. The reference signal is at about 80MHz. The Costas loop 10 effectively multiplies the I and Q signals, and the error output of this multiplier is used to tune the reference signal frequency so as to reduce the error. The process also corrects for phase errors, so that the reference signal is aligned both in frequency and in phase. This reference frequency signal is then fed back to control the frequency of the local oscillator 4 by means of a secondary phase locked loop 11.

## Description

The present invention relates to radio receiver arrangements, and in particular although not exclusively to radio receiver arrangements for transmission systems utilising phase-shift modulation, such as quadrature phase shift keying (QPSK) and quadrature amplitude modulation (QAM) systems.

Digital phase-shift modulation techniques are increasingly being used in both satellite and terrestrial transmission systems, with the phase-shift information being recovered at a receiver from intermediate frequency (IF) signals, after one or more down-changes in frequency, for example in a quadrature-phase demodulator arrangement. In such a demodulator arrangement the IF signals are mixed with local oscillator signals in in-phase and quadrature phase paths, and from the analogue signals in these paths the digital information represented by the received-carrier modulation is extracted, for example by converting these analogue signals to digital form in an A to D convertor and utilising a digital signal processor to recover the information.

For correct operation of the receiver the local oscillator must be accurately aligned in frequency and phase with the IF frequency. This frequency and phase alignment may be achieved for example by the use of a feedback signal derived from a digitally-implemented Costas loop in the digital signal processor to control the frequency of the local oscillator. Alternatively an approximately aligned fixed-frequency local oscillator may be used in conjunction with a digitally-implemented de-rotation arrangement in the digital signal processor. In this second case the de-rotation achievable is typically 0.1 to 0.15 times the symbol rate, such that for a symbol rate of 1MHz the fixed-frequency local oscillator can be as much as 150 kHz in error.

It is necessary in both cases that low local oscillator phase noise be achieved, to minimise the demodulated bit error rate. In the first case this is achieved by the design of the voltage controlled oscillator. In the second case the fixed frequency itself may be defined by a high-Q resonator to minimise its contribution to the phase noise.

Also, the voltage-controlled oscillator arrangement is susceptible to supply line noise, microphony effects and radiative noise pick-up, all of which can contribute to degradation of the bit error rate.

In the case of fixed-frequency local oscillators the high-Q resonator and the additional de-rotation processing can add to the overall system cost, and it is difficult to achieve the required frequency alignment for low data rates. As there is no feedback system such oscillators can be particularly susceptible to supply line noise.

According to one aspect of the present invention in a radio receiver arrangement for a system in which carrier signals for transmission are phase-shift modulated with information in digitised form, in which receiver arrangement received signals are mixed with local oscillator signals in in-phase and quadrature paths and analogue signals in these paths are applied by way of analogue-to-digital conversion means to a data signal processing means for demodulation, said data signal processing means is arranged to derive from the analogue-to-digitally converted signals a reference frequency signal phase-locked to said analogue signals, and a phase-locked loop circuit is provided to control the frequency of said local oscillator in dependence upon the frequency of said reference frequency signal.

According to another aspect of the present invention a radio receiver arrangement for demodulating phase-shift modulated carrier signals comprises means to mix the carrier signals with local oscillator signals in in-phase and quadrature-phase paths, analogue to digital convertor means coupling said in-phase and quadrature-phase paths to digital signal processor means arranged to generate a reference frequency signal from signals in said in-phase and quadrature-phase paths, and a phase-locked loop circuit arrangement for controlling the frequency of said local oscillator signals in dependence upon the frequency of said reference frequency signal.

Preferably the reference frequency signal is generated by means of a digitally implemented Costas loop.

Preferably the local oscillator signals are in the order of six times the frequency of the reference signal and, more preferably, the local oscillator signal frequency is of the order of 480MHz and the reference frequency is of the order of 80MHz. This allows the use of a large bandwidth phase locked loop which can offer improvements since the oscillator can have poor phase noise performance, the phase locked loop then being relied on to clean up the close-in phase noise. A large bandwidth phase locked loop also suppresses microphony and allows for fast settling time and a fully symbol rate flexible system.

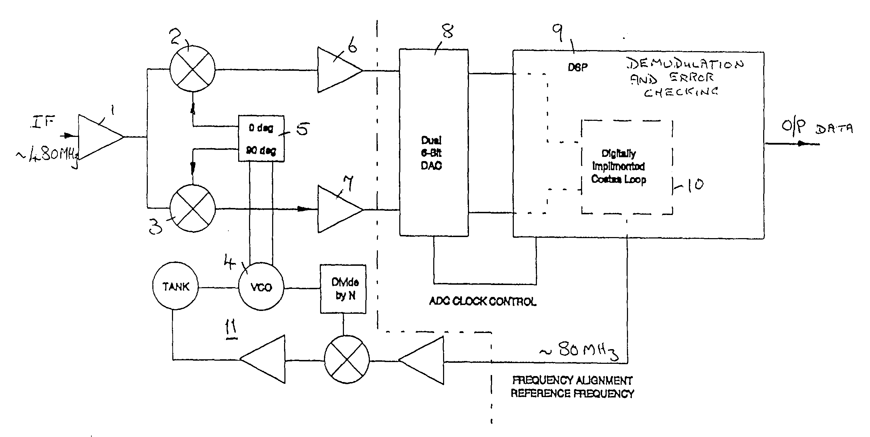

A radio receiver arrangement in accordance with the present invention will now be described by way of example with reference to the accompanying drawing, which shows part of the receiver arrangement schematically.

Referring to the drawing in a radio receiver arrangement for a quadrature phase shift keying (QPSK) transmission system intermediate frequency signals at around 480 MHz, after one or more frequency changing stages (not shown), are applied at the output of an IF amplifier 1 to a pair of mixers 2 and 3, to which local oscillator signals at 480 MHz are also applied, in phase-quadrature, from a local oscillator 4 by way of a phase splitter 5. Base-band signals in an in-phase (I) path and a quadrature-phase (Q) path from the outputs of the respective mixers 2 and 3 are applied to a dual analogue-to-digital convertor arrangement 8 by way of respective amplifiers 6 and 7.

Digitised output signals from the convertor arrangement 8 are applied to a digital signal processor 9, which is arranged to perform demodulation of the QPSK signals together with forward error correction. The processor 9 also generates a reference signal of a frequency controlled by a digitally implemented Costas loop 10 in dependence upon the digitised I and Q signals. The Costas loop 10 effectively multiplies the I and Q signals, and the error output of this multiplier is used to tune the reference signal frequency so as to reduce the error. The process also corrects for phase errors, so that the reference signal is aligned both in frequency and in phase. This reference frequency signal is then fed back to control the frequency of the local oscillator 4 by means of a secondary phase locked loop 11.

The processor 9 is able to generate a very low phase-noise reference signal, of a frequency of approximately 80MHz, which is optimally aligned with the incoming I and Q signals, and this signal is then multiplied in frequency by the phase locked loop 11. Since the bandwidth of this loop can be large the oscillator 4 can have poor phase noise performance, the phase locked loop then being relied on to clean up the close-in phase noise..

The use of an on-chip reference signal source reduces cost and is less prone to microphony, while the large bandwidth of the loop 11 allows for fast settling time and a fully symbol rate flexible system, and also suppresses microphony.

Since the reference signal is at 80HMz it can easily be made immune to direct radiative coupling interference from noise such as video-type noise.

## Claims

1. A radio receiver arrangement for a system in which carrier signals for transmission are phase-shift modulated with information in digitised form, in which receiver arrangement received signals are mixed with local oscillator signals in in-phase and quadrature paths and analogue signals in these paths are applied by way of analogue-to-digital conversion means to a data signal processing means for demodulation, wherein said data signal processing means is arranged to derive from the analogue-to-digitally converted signals a reference frequency signal phase-locked to said analogue signals, and a phase-locked loop circuit is provided to control the frequency of said local oscillator in dependence upon the frequency of said reference frequency signal.

2. A radio receiver arrangement for demodulating phase-shift modulated carrier signals comprising means to mix the carrier signals with local oscillator signals in in-phase and quadrature-phase paths, analogue to digital converter means coupling said in-phase and quadrature-phase paths to digital signal processor means arranged to generate a reference frequency signal from signals in said in-phase and quadrature-phase paths, and a phase-locked loop circuit arrangement for controlling the frequency of said local oscillator signals in dependence upon the frequency of said reference frequency signal.

3. A radio receiver arrangement in accordance with Claim 2 wherein the reference frequency signal is generated by means of a digitally implemented Costas loop.

4. A radio receiver arrangement in accordance with Claim 2 or Claim 3 wherein the frequency of the reference frequency signal is substantially a sub-multiple of the frequency of the local oscillator signals.

5. A radio receiver arrangement in accordance with Claim 4 wherein the local oscillator signals are in the order of six times the frequency of the reference signal.

6. A radio receiver arrangement in accordance with Claim 5 in wherein the local oscillator signal frequency is of the order of 480MHz and the reference frequency is of the order of 80MHz.
